# FASCICULE DE BREVET EUROPEEN

(11) **EP 0 474 577 B1**
(45) Date de publication et mention de la délivrance du brevet: **11.01.1995**
(21) Numéro de dépôt: 91470012.5
(22) Date de dépôt: 06.06.1991
(51) Int. Cl.: A61C 1/00

(54) **Dispositif de pilotage des instruments d'une unité dentaire**
Steuereinrichtung für ein zahnärztliches Gerät
Control arrangement for dental handpieces

(30) Priorité: 03.08.1990 FR 9010099
(43) Date de publication de la demande: 11.03.1992
(73) Titulaire: QUETIN S.A., 44600 Saint Nazaire (FR)
(72) Inventeur: Richou, Alain, F-44380 Pornichet (FR)
(74) Mandataire: Poupon, Michel

(56) Documents cités:
- EP-A- 0 038 452
- DE-A- 2 434 094
- DE-A- 2 710 526
- DE-B- 2 231 735
- DE-B- 2 636 957
- US-A- 3 702 940
- US-A- 4 106 198

## Description

La présente invention se rapporte au domaine des unités dentaires, et plus particulièrement au domaine des dispositifs de commande des instruments reliés à une unité dentaire pouvant recevoir différents types d'instruments nécessitant plusieurs fluides pour leur fonctionnement, l'unité étant pourvue d'une part de moyens de détection de l'instrument saisi pour être utilisé, et d'autre part d'un dispositif de commande d'alimentation des différents fluides, délivrant tous les deux des signaux électriques.

Les instruments dentaires actuels requièrent en général au moins trois fluides pour leur fonctionnement, à savoir :
- une alimentation en eau de spray
- une alimentation en air de spray
- une alimentation en air comprimé utilisé soit comme source de puissance pour les instruments à air (turbine par exemple), soit comme source de fluide de refroidissement pour des instruments électriques (par exemple micro-moteur électrique).

Une source d'air complémentaire est en général mise en complément pour réaliser la fonction "Chip blower", qui consiste à fournir un jet d'air plus puissant que l'air de spray, pour assurer un soufflage.

Il s'agit donc, pour le concepteur, de créer une structure minimum, qui permette d'assurer la distribution des différents fluides, tout en assurant que seul l'instrument choisi par le praticien entrera en fonctionnement.

Dans les constructions de type connu, par exemple du EP-A-0038452, le dispositif de détection de préhension d'un instrument est en général associé, par une fonction logique électrique, au signal de commande électrique de fonctionnement délivré par exemple par une pédale de commande. Le nouveau signal logiquement élaboré sert à piloter des électrovannes associées à chacun des instruments. Ce type de structure conduit à un nombre important d'électrovannes à gérer, qui induit un risque de pannes important et un coût élevé.

L'invention a pour objet de remédier à ces inconvénients des unités dentaires de l'art antérieur.

Conformément à l'invention, ce résultat est obtenu avec une unité dentaire pouvant recevoir différents types d'instruments nécessitant plusieurs fluides pour leur fonctionnement, comprenant des moyens détection de l'instrument saisi pour être utilisé, et un dispositif de commande d'alimentation des différents fluides, délivrant tous les deux des signaux électriques, caractérisé en ce que l'association entre les signaux de détection d'instrument et de commande est réalisée par un jeu de cellules logiques pneumatiques, de préférence des ET, dont les sorties sont directement utilisées pour assurer le fonctionnement des instruments, lesdites cellules logiques recevant d'une part un signal pneumatique provenant d'une électrovanne dite de sélection (6, 9) actionnée par le signal électrique provenant des moyens de détection d'instrument, et d'autre part un signal pneumatique provenant d'une électrovanne dite de fonction (10, 12), actionnée par le signal électrique provenant du dispositif de commande d'alimentation des différent fluides.

La distribution d'eau pour la réalisation de spray est réalisée par une électrovanne, à la sortie de laquelle l'eau est conduite en parallèle à un dispositif de coupure/ouverture piloté directement par la sortie pneumatique de la cellule logique de pilotage d'air de spray. Ce dispositif est de type avale-goutte, tel que connu dans l'art dentaire, la sortie dudit avale-goutte étant suivi d'un clapet anti-retour, de telle sorte que le ravalement en fin d'opération ne fasse remonter l'eau dans le canal correspondant que sur une longueur limitée et éventuellement nulle.

Les sorties des cellules logiques correspondant à l'air de spray et d'air de "Chip blower" sont combinées par une cellule logique ou suivies d'un clapet anti-retour.

Dans un tel dispositif, les électrovannes de fonction peuvent avantageusement être des électrovannes à ouverture proportionnelle, permettant ainsi la régulation de puissance du flux d'air délivré. Dans ce cas, les cellules ET seront choisies de telle sorte que leur sortie corresponde en débit et pression à ce qu'elles voient sur leur entrée reliée à la sortie de l'électrovanne proportionnelle.

L'électrovanne proportionnelle pourra alors être avantageusement pilotée par un dispositif de modulation de largeur d'impulsion.

On comprendra mieux l'invention à l'aide de la description complémentaire faite ci-après du schéma pneumatique d'un dispositif de pilotage d'une unité dentaire conforme a l'invention.

On y a prévu les schémas d'alimentation (1) pour une turbine, (2) et (3) pour deux moteurs différents et (4) pour un quatrième instrument optionnel.

On a représenté également un schéma d'alimentation (5) pour détartreur.

Le signal de détection de chacun des instruments agit sur une électrovanne de sélection (6 à 9), et le ou les signaux de commande de fonction agissent sur des électrovannes (10 à 12), les sorties desdites électrovannes étant reliées à des cellules logiques pneumatiques de type ET ou NON OU, assurant la combinaison de la sélection de l'instrument et des commandes de fonction.

Avantageusement, les sorties des cellules ET sont directement utilisées sans autres amplifications pour le fonctionnement des instruments.

Les sorties des cellules ET correspondant aux fonctions air de spray et chip blower, sont connectées sur une cellule OU ou NON ET, pour alimenter un seul et même canal d'air.

On peut prévoir qu'une électrovanne d'alimentation en eau soit adjointe aux électrovannes de fonction, dont la sortie alimente en parallèle les différents instruments. Dans ce cas chaque conduit d'eau pour chaque instrument alimente une vanne pilotée directement par la sortie de la cellule ET ou NON OU correspondant a l'alimentation en air de spray, et la vaine ainsi pilotée est un dispositif avale-goutte de type connu.

De préférence un clapet anti-retour est placé à la sortie du dispositif avale-goutte et la sortie de la cellule OU ou NON ET est pourvue d'un clapet anti-retour.

Avantageusement, au moins une des électrovannes de fonction est du type électrovanne à ouverture proportionnelle, qui sera alors préférentiellement pilotée par un dispositif de modulation de largeur d'impulsions.

Optionnellement on adjoint au dispositif un récipient pour liquide spécial, ledit récipient étant mis sous pression ; sa sortie est connectée sur l'alimentation en eau grâce à une électrovanne de sélection soit de l'eau soit de liquide spécial.

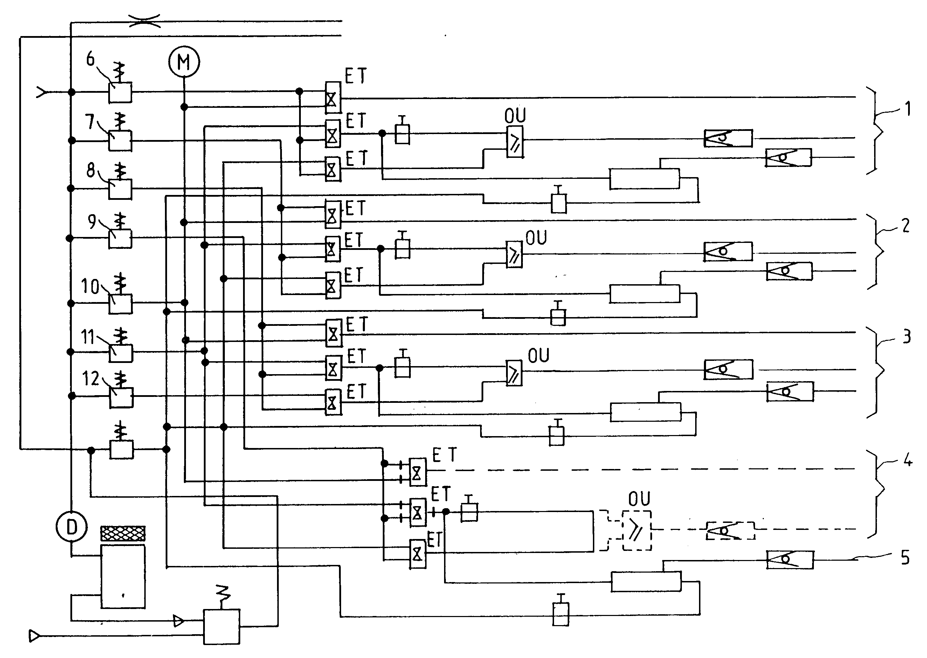

## Revendications

1. Unité dentaire pourant recevoir différents types d'instruments nécessitant plusieurs fluides pour leur fonctionnement, comprenant des moyens de détection de l'instrument saisi pour être utilisé, et un dispositif de commande d'alimentation des différents fluides, délivrant tous les deux des signaux électriques, caractérisé en ce que l'association entre les signaux de détection d'instrument et de commande est réalisée par un jeu de cellules logiques pneumatiques, de préférence des ET, dont les sorties sont directement utilisées pour assurer le fonctionnement des instruments, lesdites cellules logiques recevant d'une part un signal pneumatique provenant d'une électrovanne dite de sélection (6 à 9) actionnée par le signal électrique provenant des moyens de détection d'instrument, et d'autre part un signal pneumatique provenant d'une électrovanne dite de fonction (10 à 12) actionnée par le signal électrique provenant du dispositif de commande d'alimentation des différents fluides.

2. Dispositif selon la revendication 1, caractérisé en ce que la distribution d'eau pour la réalisation de spray est réalisée par une électrovanne, à la sortie de laquelle l'eau est conduite en parallèle à un dispositif de coupure/ouverture piloté directement par la sortie pneumatique de la cellule logique de pilotage d'air de spray, ce dispositif étant de type avale-goutte la sortie dudit avale-goutte étant suivie d'un clapet anti-retour, de telle sorte que le ravalement en fin d'opération ne fasse remonter l'eau dans le canal correspondant que sur une longueur limitée et éventuellement nulle.

3. Dispositif selon l'une quelconque des revendications 1 et 2, caractérisé en ce que les sorties des cellules logiques correspondant à l'air de spray et d'air de "Chip blower" sont combinées par une cellule logique ou suivies d'un clapet anti-retour.

4. Dispositif selon la revendication 3, caractérisé en ce que les électrovannes de fonction sont des électrovannes à ouverture proportionnelle, permettant la régulation de puissance du flux d'air délivré, les cellules ET étant choisies de telle sorte que leur sortie corresponde en débit de pression à ce qu'elles voient sur leur entrée reliée à la sortie de l'électrovanne proportionnelle.

5. Dispositif selon la revendication 4, caractérisé en ce que l'électrovanne proportionnelle est pilotée par un dispositif de modulation de largeur d'impulsion.

6. Dispositif selon l'une quelconque des revendications 1 à 5, caractérisé en ce qu'il est adapté pour l'alimentation de :
- (1) une turbine ;
- (2) et (3) deux moteurs différents ;
- (4) un quatrième instrument optionnel ;
- (5) un détartreur.

7. Dispositif selon l'une quelconque des revendications 1 à 6, caractérisé en ce que les cellules logiques pneumatiques sont de type ET ou NON OU.

8. Dispositif selon l'une quelconque des revendications 1 à 7, caractérisé en ce que les sorties des cellules ET sont directement utilisées sans autres amplifications pour le fonctionnement des instruments.

9. Dispositif selon l'une quelconque des revendications 1 à 8, caractérisé en ce que les sorties des cellules ET correspondant aux fonctions air de spray et chip blower, sont connectées sur une cellule OU ou NON ET, pour alimenter un seul et même canal d'air.

10. Dispositif selon l'une quelconque des revendications 1 à 9, caractérisé en ce qu'une électrovanne d'alimentation en eau est adjointe aux électrovannes de fonction, dont la sortie alimente en parallèle les différents instruments et que chaque conduit d'eau pour chaque instrument alimente une vanne pilotée directement par la sortie de la cellule ET ou NON OU correspondant à l'alimentation en air de spray, la vanne ainsi pilotée étant un dispositif avale-goutte.

11. Dispositif selon l'une quelconque des revendications 1 à 10, caractérisé en ce qu'il comporte en outre un récipient pour liquide spécial, ledit récipient étant mis sous pression, sa sortie étant connectée sur l'alimentation en eau grâce à une électrovanne de sélection soit de l'eau soit du liquide spécial.

## Claims

1. Dental unit capable off receiving various types of instruments which require a plurality of fluids for their operation, comprising means for detecting the seized instrument to be used, and a device for controlling the supply of the various fluids, both generating electrical signals, characterised in that the association between the instrument detection and control signals is achieved by a set of pneumatic logical cells, preferably AND cells, the outputs of which are used directly to ensure the operation of the instruments, said logical cells receiving, on the one hand, a pneumatic signal coming from a so-called selection solenoid (6 to 9), actuated by the electrical signal coming from the instrument detection means and, on the other hand, a pneumatic signal coming from a so-called operating solenoid (10 to 12), actuated by the electrical signal coming from the device controlling the supply of the various fluids.

2. Device according to claim 1, characterised in that the distribution of water to produce spray is achieved by a solenoid, at the output of which the water is conducted in parallel to a closing/opening device driven directly by the pneumatic output of the logical cell for driving the spray air, this device being of the drop-swallowing type, the outlet of said drop-swallowing device being followed by a non-return valve, so that the swallowing at the end of the operation only causes the water to rise in the corresponding conduit over a limited length and possibly not at all.

3. Device according to any of claims 1 and 2, characterised in that the outputs of the logical cells corresponding to the spray air and the "Chip blower" air are combined by a logical cell or followed by a non-return valve.

4. Device according to claim 3, characterised in that the operating solenoids are proportional opening solenoids, permitting regulation of the strength of the air flow delivered, the AND cells being chosen so that their output corresponds in output pressure to what they see at their input connected to the output of the proportional solenoid.

5. Device according to claim 4, characterised in that the proportional solenoid is driven by a pulse width modulation device.

6. Device according to any of claims 1 to 5, characterised in that it is adapted for supply from:
- (1) a turbine,
- (2) and (3) two different motors;
- (4) a fourth optional instrument; and
- (5) a descaler.

7. Device according to any of claims 1 to 6, characterised in that the pneumatic logical cells are of the AND type or the NOR type.

8. Device according to any of claims 1 to 7, characterised in that the outputs of the AND cells are directly used without other amplifications for operating the instruments.

9. Device according to any of claims 1 to 8, characterised in that the outputs of the AND cells, which correspond to the spray air and chip blower air operations, are connected to an OR or NAND cell, in order to supply a single and same air conduit.

10. Device according to any of claims 1 to 9, characterised in that a water supply solenoid is added to the operating solenoids, the output of which supplies the various instruments in parallel, and in that each water conduit for each instrument supplies a valve directly driven by the output of the AND or NOR cell which corresponds to the spray air supply, the valve thus driven being a drop-swallowing device.

11. Device according to any of claims 1 to 10, characterised in that it also comprises a vessel for special liquid, said vessel being pressurised, its output being connected to the water supply by means of a solenoid which selects either water or the special liquid.

## Patentansprüche

1. Zahnärztliches Gerät zur Aufnahme verschiedener Typen von Instrumenten, welche verschiedene flüssige oder gasförmige Medien für ihr Arbeiten benötigen, welche Mittel zum Erfassen des zum Gebrauch gegriffenen Instrumentes aufweist und für die Versorgung mit den unterschiedlichen Medien eine Steuervorrichtung hat, die alle beide der elektrischen Signale liefert, **dadurch gekennzeichnet**, daß die Zusammenführung der Signale der Instrumentenerfassung und der Steuervorrichtung durch einen Satz logischer, pneumatischer Zellen erfolgt, vorzugsweise UND-Glieder, deren Ausgänge unmittelbar für die Sicherstellung der Funktion der Instrumente benutzt werden, wobei die logischen Zellen einerseits ein pneumatisches Signal erhalten, welches von einem Magnetventil (6 bis 9) für das genannte Auswählen stammt, das von dem elektrischen Signal betätigt wurde, welches von den Erfassungsmitteln für die Instrumente kommt, und andererseits ein pneumatisches Signal erhalten, welches von einem Magnetventil (10 bis 12) für die genannte Funktion stammt, das von dem elektrischen Signal betätigt wurde, welches von der Steuervorrichtung für die Versorgung mit unterschiedlichen Medien stammt.

2. Vorrichtung nach Anspruch 1, **dadurch gekennzeichnet**, daß für die Zuführung von Wasser für einen Spray ein Magnetventil vorgesehen ist, von dessen Ausgang das Wasser parallel zu einer Vorrichtung zum Absperren und Öffnen führt, welche unmittelbar von dem pneumatischen Ausgang der logischen Zelle zum Steuern der Luft des Sprays gesteuert ist, wobei diese Vorrichtung als Tropfenzurückhalter ausgebildet ist und der Ausgang des Tropfenzurückhalters mit einem Rückschlagventil versehen ist, so daß die Reinigung am Ende des Arbeitens nur zu einem Zurücklaufen des Wassers über eine begrenzte Länge, eventuell Null, führt.

3. Vorrichtung nach einem der Ansprüche 1 und 2, **dadurch gekennzeichnet**, daß die Ausgänge der logischen Zellen, welche zu der Sprayluft und der Luft des "Chip blower" (Spänewegblasers) gehören, durch eine logische Zelle miteinander verknüpft sind oder denen ein Rückschlagventil folgt.

4. Vorrichtung nach Anspruch 3, **dadurch gekennzeichnet**, daß die Magnetventile für die Funktion Magnetventile zum proportionalen Öffnen sind, welche die Einstellung der Leistung des zugeführten Luftstromes ermöglichen, und daß die UND-Zellen derart ausgewählt wurden, daß ihr Ausgang mit dem zugeführten Druck übereinstimmt, den sie an ihrem Eingang erhalten, der mit dem Auslaß des proportionalen Magnetventils verbunden ist.

5. Vorrichtung nach Anspruch 4, **dadurch gekennzeichnet**, daß das proportionale Magnetventil durch eine Vorrichtung zur Impulsbreitenmodulation gesteuert ist.

6. Vorrichtung nach einem der Ansprüche 1 bis 5, **dadurch gekennzeichnet**, daß sie ausgebildet ist für die Versorgung:
(1) einer Turbine;
(2) und (3) zwei verschiedener Motore;
(4) einem vierten, wahlweisen Instrument;
(5) einem Zahnsteinentferner.

7. Vorrichtung nach einem der Ansprüche 1 bis 6, **dadurch gekennzeichnet**, daß die logischen, pneumatischen Zellen UND-Glieder oder NEIN/ODER-Glieder sind.

8. Vorrichtung nach einem der Ansprüche 1 bis 7, **dadurch gekennzeichnet**, daß die Ausgänge der UND-Zellen unmittelbar ohne sonstige Verstärkung für das Arbeiten der Instrumente benutzt sind.

9. Vorrichtung nach einem der Ansprüche 1 bis 8, **dadurch gekennzeichnet**, daß die Ausgänge der UND-Zellen, welche den Funktionen der Sprühluft und der Spänewegblaser entsprechen, mit einer ODER-Zelle oder NEIN/UND-Zelle verbunden sind, um ein und denselben Luftkanal zu versorgen.

10. Vorrichtung nach einem der Ansprüche 1 bis 9, **dadurch gekennzeichnet**, daß eine Magnetventil zur Wasserversorgung den Magnetventilen für die Funktion hinzugefügt ist, dessen Ausgang die unterschiedlichen Instrumente parallel zueinander versorgt, und daß jede Wasserleitung für jedes Instrument ein Ventil versorgt, welches unmittelbar vom Ausgang der UND-Zelle oder NEIN/UND-Zelle gesteuert ist, der der Versorgung mit Sprühluft entspricht, wobei das auf diese Weise gesteuerte Ventil eine Vorrichtung zum Tropfenzurückhalten darstellt.

11. Vorrichtung nach einem der Ansprüche 1 bis 10, **dadurch gekennzeichnet**, daß sie desweiteren einen unter Druck gesetzten Behälter für spezielle Flüssigkeit aufweist, dessen Ausgang mit der Wasserversorgung über ein Elektroventil zum Anwählen von Wasser oder Spezialflüssigkeit verbunden ist.
